(19) Europäisches Patentamt
European Patent Office
Office européen des brevets

(11) EP 3 798 922 A1

(12) **EUROPÄISCHE PATENTANMELDUNG**

(43) Veröffentlichungstag:
**31.03.2021  Patentblatt 2021/13**

(51) Int Cl.:
**G06N 3/04** (2006.01)       **G06N 5/02** (2006.01)
**G06N 3/08** (2006.01)       **G06F 40/20** (2020.01)

(21) Anmeldenummer: **20183595.6**

(22) Anmeldetag: **02.07.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **02.08.2019  DE 102019211651**

(71) Anmelder: **Robert Bosch GmbH
70442 Stuttgart (DE)**

(72) Erfinder:
• **Stroetgen, Jannik
76135 Karlsruhe (DE)**
• **Adel-Vu, Heike
70565 Stuttgart (DE)**

(54) **VORRICHTUNG UND VERFAHREN ZUM MASCHINENLERNEN UND ANSTEUERN EINER MASCHINE**

(57)     Vorrichtung und Verfahren zum Ansteuern einer Maschine oder Maschinenlernen oder Füllen eines Knowledge Graphs, wobei in einer ersten Phase Trainingsdaten bereitgestellt werden (202), wobei die Trainingsdaten Texte mit Labels bezüglich einer strukturierten Information umfassen, in einer zweiten Phase ein System für Klassifikation, insbesondere ein künstliches neuronales Netz, mittels dieser Trainingsdaten trainiert wird (204), wobei das System für Klassifikation eine Attentionfunktion umfasst, die ausgebildet ist, einzelne Vektorrepräsentationen einzelner Teile eines Satzes abhängig von Gewichten zu gewichten, wobei abhängig von einer Ausgabe der Attentionfunktion eine Klassifikation des Satzes bestimmt wird, wobei eines der Gewichte für eine Vektorrepräsentation eines der Teile eines Satzes durch ein erstes Merkmal, eine erste Gewichtung für das erste Merkmal, ein zweites Merkmal und eine zweite Gewichtung für das zweite Merkmal definiert ist, wobei das erste Merkmal abhängig von einem Dependenzbaum für den Satz definiert ist, und wobei das zweite Merkmal abhängig von wenigstens einem Relationsargument für den Satz definiert ist, und wobei in einer dritten Phase die Maschine in Erwiderung auf Eingangsdaten, insbesondere eine Sprach- oder Texteingabe, abhängig von einem Ausgangssignal des so trainierten Systems angesteuert wird (206), oder in einer dritten Phase der Knowledge Graph in Erwiderung auf Eingangsdaten, die Text mit Entitäten enthalten, abhängig von Relationsargumenten, die abhängig von den Eingangsdaten bestimmt werden, mit Informationen gefüllt wird, insbesondere erweitert oder neu gebaut wird, wobei eine Relation zwischen zwei Entitäten des in den Eingangsdaten enthaltenen Texts abhängig vom Modell bestimmt und einer Kante des Knowledge Graphs zwischen diesen Entitäten zugeordnet wird (206).

Fig. 2

EP 3 798 922 A1

**EP 3 798 922 A1**

**Beschreibung**

Stand der Technik

Die Erfindung geht aus von einer Vorrichtung und einem Verfahren zum Maschinenlernen und Ansteuern einer Maschine.

Verfahren zum Maschinenlernen können Texte verwenden, um eine Maschine dazu zu trainieren, basierend auf einem Inhalt des Texts Aktionen auszuführen. Eine Relationsextraktion ist eine Möglichkeit, strukturierte Information aus einem Text zu extrahieren. Dazu können recurrent neural networks oder convolutional neural networks eingesetzt werden. Zur robusten Ansteuerung von Maschinen oder zum Maschinenlernen ist es wünschenswert derartige Verfahren weiter zu verbessern.

Offenbarung der Erfindung

Dies wird durch den Gegenstand der unabhängigen Ansprüche erreicht.

Ein Verfahren zum Ansteuern einer Maschine sieht vor, dass in einer ersten Phase Trainingsdaten bereitgestellt werden, wobei die Trainingsdaten Texte mit Labels bezüglich einer strukturierten Information insbesondere in den Texten enthaltene Konzepte, Entitäten oder Relationen zwischen diesen umfassen, in einer zweiten Phase ein System für Klassifikation, insbesondere ein künstliches neuronales Netz, mittels dieser Trainingsdaten trainiert wird, wobei das System für Klassifikation eine Attentionfunktion umfasst, die ausgebildet ist, einzelne Vektorrepräsentationen einzelner Teile eines Satzes abhängig von Gewichten zu gewichten, wobei abhängig von einer Ausgabe der Attentionfunktion eine Klassifikation des Satzes bestimmt wird, wobei eines der Gewichte für eine Vektorrepräsentation eines der Teile eines Satzes durch ein erstes Merkmal, eine erste Gewichtung für das erste Merkmal, ein zweites Merkmal und eine zweite Gewichtung für das zweite Merkmal definiert ist, wobei das erste Merkmal abhängig von einem Dependenzbaum für den Satz definiert ist, und wobei das zweite Merkmal abhängig von wenigstens einem Relationsargument für den Satz definiert ist, und wobei in einer dritten Phase die Maschine in Erwiderung auf Eingangsdaten, insbesondere eine Sprach- oder Texteingabe, abhängig von einem Ausgangssignal des so trainierten Systems angesteuert wird. Durch das Modell wird abhängig von den Eingangsdaten eine Entscheidung getroffen, gemäß der die Maschine angesteuert wird. Die Entscheidung ist relationsargument-spezifisch. Dadurch kann auf bestimmte Teile des Satzes ein größerer Fokus gelegt werden, als auf andere. Dies verbessert die Entscheidung und damit die Ansteuerung der Maschine signifikant.

Ein Verfahren zum Füllen eines Knowledge Graphs sieht vor, dass in einer ersten Phase Trainingsdaten bereitgestellt werden, wobei die Trainingsdaten Texte mit Labels bezüglich einer strukturierten Information umfassen insbesondere in den Texten enthaltene Konzepte, Entitäten oder Relationen zwischen diesen, in einer zweiten Phase ein System für Klassifikation, insbesondere ein künstliches neuronales Netz, mittels dieser Trainingsdaten trainiert wird, wobei das System für Klassifikation eine Attentionfunktion umfasst, die ausgebildet ist, einzelne Vektorrepräsentationen einzelner Teile eines Satzes abhängig von Gewichten zu gewichten, wobei abhängig von einer Ausgabe der Attentionfunktion eine Klassifikation des Satzes bestimmt wird, wobei eines der Gewichte für eine Vektorrepräsentation eines der Teile eines Satzes durch ein erstes Merkmal, eine erste Gewichtung für das erste Merkmal, ein zweites Merkmal und eine zweite Gewichtung für das zweite Merkmal definiert ist, wobei das erste Merkmal abhängig von einem Dependenzbaum für den Satz definiert ist, und wobei das zweite Merkmal abhängig von wenigstens einem Relationsargument für den Satz definiert ist, und wobei in einer dritten Phase der Knowledge Graph in Erwiderung auf Eingangsdaten, die Text mit Entitäten enthalten, abhängig von Relationsargumenten, die abhängig von den Eingangsdaten bestimmt werden, mit Informationen gefüllt wird, insbesondere erweitert oder neu gebaut wird, wobei eine Relation zwischen zwei Entitäten des in den Eingangsdaten enthaltenen Texts abhängig vom Modell bestimmt und einer Kante des Knowledge Graphs zwischen diesen Entitäten zugeordnet wird.

In diesem Anwendungsfall wird der Knowledge Graph gefüllt, d.h. die extrahierten Relationen werden im Knowledge Graph gelabelten Kanten zwischen Entitäten zugeordnet.

Ein computerimplementiertes Verfahren zum Trainieren eines Modells, insbesondere eines künstlichen neuronalen Netzwerks sieht vor, dass in einer ersten Phase Trainingsdaten bereitgestellt werden, wobei die Trainingsdaten Texte mit Labes bezüglich einer strukturierten Information umfassen, in einer zweiten Phase ein System für Klassifikation, insbesondere ein künstliches neuronales Netz, mittels dieser Trainingsdaten trainiert wird, wobei das System für Klassifikation eine Attentionfunktion umfasst, die ausgebildet ist, einzelne Vektorrepräsentationen einzelner Teile eines Satzes abhängig von Gewichten zu gewichten, wobei abhängig von einer Ausgabe der Attentionfunktion eine Klassifikation des Satzes bestimmt wird, wobei eines der Gewichte für eine Vektorrepräsentation eines der Teile eines Satzes durch ein erstes Merkmal, eine erste Gewichtung für das erste Merkmal, ein zweites Merkmal und eine zweite Gewichtung für das zweite Merkmal definiert ist, wobei das erste Merkmal abhängig von einem Dependenzbaum für den Satz definiert ist, und wobei das zweite Merkmal abhängig von wenigstens einem Relationsargument für den Satz definiert ist. Dies

2

stellt ein besonders effektives Lernverfahren dar.

Vorzugsweise charakterisiert das erste Merkmal eine erste Distanz zwischen einem Wort des Satzes und einem ersten Relationsargument in einem Dependenzbaum für diesen Satz und eine zweite Distanz zwischen dem Wort und einem zweiten Relationsargument im Dependenzbaum, eine Vektorrepräsentation einer kürzesten Verbindung zwischen den beiden Relationsargumenten im Dependenzbaum und/oder eine binäre Variable, die anzeigt, ob das Wort auf der kürzesten Verbindung liegt oder nicht. Das Wort kann ein Wort im Satz sein, das ein Relationsargument ist. Das Wort kann ein Wort im Satz sein, das selbst kein Relationsargument ist. Beispielweise befindet sich für den Satz "Barack Obama Sr., the father of Barack Obama, was born in 1936." das Relationsargument "Barack Obama" im Dependenzbaum nicht zwischen den Relationsargumenten "Barack Obama Sr." und "1936". Damit ist die Länge des Pfades zwischen "Barack Obama" und "1936" nicht kürzer als die Länge des Pfades zwischen "Barack Obama Sr." und "1936". Dies verbessert die Entscheidung des Modells zusätzlich.

Bevorzugt ist vorgesehen, dass die erste Distanz durch eine Länge, insbesondere einer Anzahl Kanten, eines insbesondere kürzesten Pfades zwischen einer Position des Worts und des ersten Relationsarguments im Dependenzbaum des Satzes definiert ist und/oder dass die zweite Distanz durch eine Länge, insbesondere einer Anzahl Kanten, eines insbesondere kürzesten Pfades zwischen einer Position des Worts und des zweiten Relationsarguments im Dependenzbaum des Satzes definiert ist.

Vorzugsweise charakterisiert das zweite Merkmal die Relationsargumente und ihren Typ.

Vorzugsweise repräsentiert ein erster Vektor das erste Relationsargument, wobei ein zweiter Vektor das zweite Relationsargument repräsentiert. Dadurch lernt das Modell für bestimmte Relationsargumente bestimmte Schlüsselwörter im Text zu betrachten oder zu ignorieren.

Bevorzugt repräsentiert ein Vektor den Typ eines der Relationsargumente. Dadurch lernt das Modell für bestimmte Typen von Relationsargumenten bestimmte Schlüsselwörter im Text zu betrachten oder zu ignorieren. Beispielsweise wird so gelernt, dass die Schlüsselwörter "was born in" für Personen und Datumsangaben wichtig sind, nicht aber für Organisationen.

Eine Vorrichtung zum Ansteuern einer Maschine und/oder zum Maschinenlernen, umfasst einen Prozessor, und einen Speicher für ein Modell eines Systems für Klassifikation, insbesondere ein künstliches neuronales Netz, die ausgebildet sind das Verfahren auszuführen.

Weitere vorteilhafte Ausführungsformen ergeben sich aus der folgenden Beschreibung und der Zeichnung. In der Zeichnung zeigt

Fig. 1    eine schematische Darstellung einer Vorrichtung zum Ansteuern einer Maschine oder Maschinenlernen,
Fig. 2    Schritte in einem Verfahren zum Ansteuern einer Maschine,
Fig. 3    Schritte in einem Verfahren zum Maschinenlernen,
Fig. 4    eine schematische Darstellung von Merkmalen.

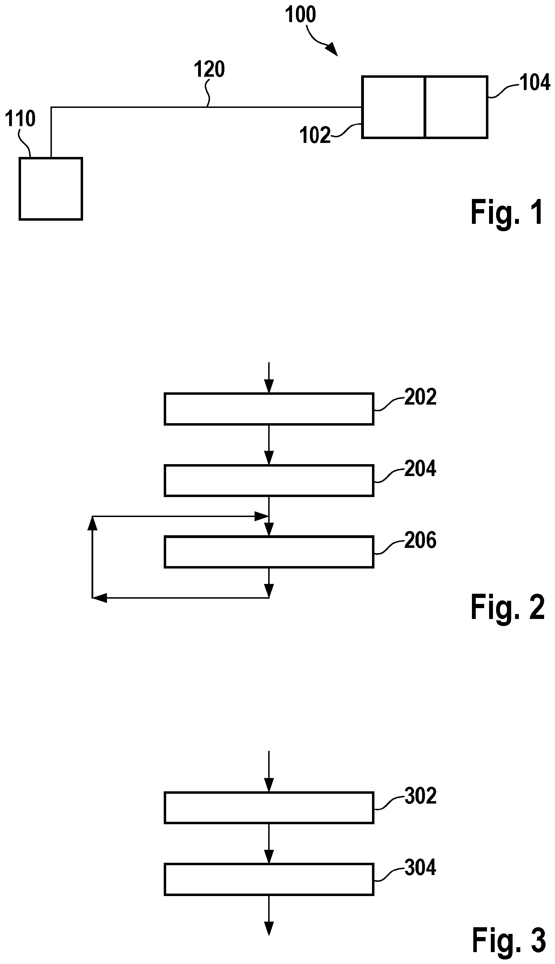

Figur 1 stellt Teile einer Vorrichtung 100 zum Ansteuern einer Maschine 110 dar. Die Vorrichtung 100 kann zusätzlich oder alternativ dazu zum Maschinenlernen ausgebildet sein.

Die Vorrichtung 100 umfasst einen Prozessor 102, und einen Speicher 104 für ein Modell eines Systems für Klassifikation, insbesondere ein künstliches neuronales Netz, die ausgebildet sind eines der im Folgenden beschriebenen zwei Verfahren oder beide Verfahren auszuführen. Zum Trainieren ist als Vorrichtung 100 vorzugsweise ein Server oder ein verteiltes Serversystem vorgesehen. Zum Ansteuern der Maschine 110 kann auch eine Übertragung eines im Training trainierten Modells auf eine Vorrichtung 100 vorgesehen sein, die einen Mikrocontroller als Prozessor 102 und Speicher 104 umfasst.

Die Maschine 110 ist durch ein Ansteuersignal ansteuerbar, das von der Vorrichtung 100 über eine Signalleitung 120 empfangen werden kann, wenn die Vorrichtung 100 das im Folgenden beschriebene Verfahren zum Ansteuern der Maschine 110 ausführt um das Ansteuersignal als Ausgabe zu bestimmen.

Das Verfahren zum Ansteuern der Maschine 110 sieht in einem Schritt 202 vor, dass in einer ersten Phase Trainingsdaten bereitgestellt werden.

Die Trainingsdaten basieren auf digitalen Textdokumenten oder auf digitalen Sprachaufzeichnungen. Diese werde im Folgenden allgemein als Texteingaben bezeichnet. Für digitale Sprache kann eine vorgeschaltete Umwandlung von Audiosignalen in Textdaten vorgesehen sein.

Die Trainingsdaten umfassen Texte mit Labels bezüglich einer strukturierten Information. Für die Texte werden in einem ersten Schritt des neuronalen Netzes Vektorrepräsentationen erstellt. Diese Vektorrepräsentationen sind Signale für die Attentionfunktion.

Beispielsweise werden die Vektorrepräsentationen abhängig von den Texteingaben bestimmt. Einzelne Teile eines Satzes sind in diesem Beispiel einzelne Wörter oder einzelne Phrasen aus den Sätzen.

Anschließend wird in einem Schritt 204 in einer zweiten Phase ein System für Klassifikation mittels dieser Trainingsdaten trainiert.

Das System für Klassifikation umfasst im Beispiel das Modell mit einer Attentionfunktion. Das Modell ist beispielsweise ein künstliches neuronales Netz mit einer Attentionsschicht, die zwischen einer Eingangsschicht und einer Ausgangsschicht des künstlichen neuronalen Netzes angeordnet ist.

Die Attentionfunktion ist ausgebildet, einzelne Vektorrepräsentationen einzelner Teile eines Satzes abhängig von den Gewichten zu gewichten. Dadurch werden einzelne Teile eines Satzes abhängig von Gewichten gewichtet.

Abhängig von einer Ausgabe der Attentionfunktion wird eine Klassifikation des gesamten Satzes bestimmt. Das System für Klassifikation ist damit insgesamt ausgebildet, für die Klassifikation relevante Teile des Satzes zu erkennen und zu extrahieren.

Im Training wird jeder Satz abhängig von den relevanten Teilen klassifiziert und die Gewichte abhängig vom Ergebnis der Klassifikation gelernt. Dies wird im Folgenden für eines der Gewichte für eine der Vektorrepräsentationen eines der Teile eines bestimmten Satzes beschrieben. Die anderen Gewichte werden im Beispiel für die anderen Teile dieses Satzes entsprechend verwendet und gelernt.

Eines der Gewichte für eine Vektorrepräsentation eines der Teile eines Satzes ist durch ein erstes Merkmal, eine erste Gewichtung für das erste Merkmal, ein zweites Merkmal und eine zweite Gewichtung für das zweite Merkmal definiert.

Das erste Merkmal ist abhängig von einem Dependenzbaum für den Satz definiert. Das zweite Merkmal ist abhängig von wenigstens einem Relationsargument für den Satz definiert.

In die Attentionfunktion sind für eine Satzlänge $n$ erste Merkmale aus einer ersten Merkmalsgruppe für lokale, d.h. Token-spezifische Merkmale $l_i \in \mathbb{R}^L$, $1 \leq i \leq n$ und zweite Merkmale aus einer zweiten Merkmalsgruppe $g \in \mathbb{R}^G$ für globale, d.h. Satz-spezifische Merkmale integriert. Für ein Token i, das einen Teil eines Satzes beispielsweise ein Wort repräsentiert, ist ein Gewicht $\alpha_i$ damit definiert durch

$$\alpha_i = \frac{\exp(e_i)}{\sum_{j=1}^{n} \exp(e_j)}$$

mit dem folgenden score für das Token i

$$e_i = v^T \tanh(W_h h_i + W_q q + W_s p_i^s + W_o p_i^o + W_l l_i + W_g g)$$

wobei $\sum_{j=1}^{n} \exp(e_j)$ eine Normalisierung darstellt.

mit den folgenden trainierbaren Parametern der Attentionfunktion:

$$v \in \mathbb{R}^A, W_h \in \mathbb{R}^{A \times H}, W_q \in \mathbb{R}^{A \times H}, W_s \in \mathbb{R}^{A \times P}, W_o \in \mathbb{R}^{A \times P}, W_l \in \mathbb{R}^{A \times L}, W_g \in \mathbb{R}^{A \times G}$$

Dabei ist eine Dimension $P$ von Positionsmerkmalen definiert als $P: p_i^s, p_i^o \in \mathbb{R}^P$, wobei $p_i^s$ eine Entfernung des Tokens $i$ zum ersten Relationsargument, und $p_i^o$ eine Entfernung des Tokens $i$ zum zweiten Relationsargument kodiert. Die Hyperparameter L und G sind die Dimensionen der Token-spezifische Merkmale $l_i \in \mathbb{R}^L$ und der Satz-spezifische Merkmale $g \in \mathbb{R}^G$.

Zur Bestimmung eines Gewichts $\alpha_i$ eines verborgenen Zustands $h_i$ werden andere Merkmalsausprägungen verwendet als zur Bestimmung eines Gewichts $\alpha_j$ für einen verborgenen Zustand $h_j$ mit ($i \neq j$). Die verborgenen Zustände $h_i$, $q \in \mathbb{R}^H$ definieren Eingänge für eine Attentionsschicht. Dabei ist $h_i$ der verborgene Zustand, des Tokens i und q das der letzte verborgene Zustand des Satzes aus dem das Token stammt. Ein verborgener Vektor der Attentionsschicht hat die Dimension A.

Für einen bestimmten Satz ist das erste Merkmal abhängig von einem Dependenzbaum für den Satz definiert. Das zweite Merkmal für den Satz ist abhängig von wenigstens einem Relationsargument für Teile des Satzes definiert.

Zum Training werden Sätze damit abhängig von ihren relevanten Teilen klassifiziert und die Gewichte abhängig vom Ergebnis der Klassifikation gelernt.

Die anderen trainierbaren Parameter der Attentionfunktion werden in einem Aspekt ebenfalls trainiert.

Die relevanten Teile werden beispielsweise mit einem Modell ermittelt, das ausgehend von einem Modell nach Zhang et al. (2017) "Position aware attention and supervised data improve slot filling" In Proceedings of the 2017 Conference on Empirical Methods in Natural Language Processing, pages 35-45, Copenhagen, Denmark, Association for Computational Linguistics folgende vier Teile umfasst:

eine Eingangsschicht, zwei geschichtete long short-term memory Schichten, eine Attentionsschicht und eine Ausgangsschicht.

Die Attentionsschicht aus dem Modell nach Zhang et al. (2017) wird in diesem Beispiel durch die Attentionsschicht mit der beschriebenen Integration verschiedener zusätzlicher Signale für die Attentionfunktion in die Attentionsschicht ergänzt, d.h. die Attentiongewichte werden mit einer neuen Funktion berechnet. Andere, diese Attentionsschicht umgebende Ein- und Ausgangsschichten sowie andere dazwischen liegende Schichten können in Abweichung vom Modell nach Zhang et al. (2017) ebenfalls vorgesehen werden.

In der Eingangsschicht wird in diesem Beispiel jedes Token $i$ durch eine Konkatenation seines word embeddings seines part-of-speech embeddings und seines named-entity-tag embeddings repräsentiert. Die word embeddings werden im Beispiel durch ein zuvor trainiertes 300-dimensionales GloVe embedding initialisiert, die anderen beiden embeddings werden zufällig initialisiert. Das GloVe embedding bezeichnet, ein embedding nach Pennington et. "Glove: Global vectors for word representation"; Proceedings of the 2014 Conference on Empirical Methods in Natual Language Processing (EMNLP), pages 1532-1543, Doha, Qatar; Association for Computational Linguistics.

Für Tokens $i$, die im Vokabular für die Eingangsschicht nicht bekannt sind, wird im Beispiel ein zusätzliches embedding vorgesehen, das als Mittelwert aller dieser zuvor trainierten 300-dimensionalen GloVe embeddings bestimmt wird.

Die LSTM Schichten sind im Beispiel zwei unidirektional aufeinander geschichtete LSTM Schichten. Ein Ausgang der bezüglich einer Forwärtspropagation durch das Modell letzten LSTM Schicht der beiden LSTM Schichten, d.h. deren verborgene Zustände, werden zur Bestimmung einer Repräsentation ganzer Sätze mit Attentiongewichten gewichtet kombiniert.

Die Ausgangsschicht ist im Beispiel eine lineare Schicht. Ein Ausgang des Modells wird in diesem Beispiel durch die Ausgangsschicht erzeugt, indem die Repräsentation eines ganzen Satzes in die lineare Schicht gegeben wird, die die Repräsentation des ganzen Satzes auf einen Vektor abbildet, der eine Anzahl Ausgangsklassen repräsentiert. Danach wird im Beispiel eine Softmax Aktivierungsfunktion verwendet, um einen Wahrscheinlichkeitsverteilung über die Ausgangsklassen zu erhalten.

Die relevanten Teile der ganzen Sätze werden in diesem Beispiel abhängig von den Ausgangsklassen identifiziert und anschließend beispielsweise mit einem Long short-term memory, LSTM, klassifiziert.

Das Training endet beispielsweise, wenn eine vorgegebene Anzahl Trainingsdaten klassifiziert wurde.

Anschließend wird in einem Schritt 206 in einer dritten Phase die Maschine 110 in Erwiderung auf Eingangsdaten, insbesondere eine Sprach- oder Texteingabe, abhängig von dem Ausgangssignal des so trainierten Systems angesteuert.

Durch das Modell wird dabei abhängig von den Eingangsdaten durch die Klassifikation eine Entscheidung getroffen, gemäß der die Maschine 110 angesteuert wird.

Im Schritt 206 kann stattdessen oder zusätzlich vorgesehen sein, abhängig von den Eingangsdaten einen Knowledge Graph neu zu bauen oder einen bestehenden Knowledge Graph zu erweitern. Der Knowledge Graph wird in Erwiderung auf Eingangsdaten, die Text mit Entitäten enthalten bestimmt. Der Knowledge Graph wird abhängig von Relationsargumenten, die abhängig von den Eingangsdaten bestimmt werden, mit Informationen gefüllt. Eine Relation zwischen zwei Entitäten des in den Eingangsdaten enthaltenen Texts wird einer Kante des Knowledge Graphs zwischen diesen Entitäten im Knowledge Graph zugeordnet.

Die Relationen werden in diesem Fall mit dem Modell bestimmt. Das Modell bekommt einen Text, z.B. einen Satz, und zwei Entitäten als Eingangsdaten. Der Satz lautet beispielsweise "Barack Obama Sr., the father of Barack Obama, married Kezia". Die zwei Entitäten können entweder bereits Knoten in einem bestehenden Knowledge Graph sein oder als solche in einen bestehenden oder neu zu bauenden Knowledge Graph eingefügt werden. Beispielsweise sind die Entitäten "Barack Obama Sr." und "Kezia". Das Attention-basierte Modell wird auf diese Eingangsdaten angewendet. Als Ausgabe wird in diesem Fall vom Modell die Relation "spouse_of" ausgegeben. Im Knowledge Graph wird dann eine Kante zwischen den Knoten "Barack Obama Sr." und "Kezia" eingefügt mit dem Label "spouse_of".

Anschließend wird das Verfahren mit dem Schritt 206 für neue Eingangsdaten wiederholt.

Ein computerimplementiertes Verfahren zum Trainieren des Modells, insbesondere des künstlichen neuronalen Netzes, sieht vor, dass in einem Schritt 302 in einer ersten Phase Trainingsdaten bereitgestellt werden.

Die Trainingsdaten werden beispielsweise wie in Schritt 204 beschrieben bereitgestellt.

Anschließend wird in einem Schritt 304 in einer zweiten Phase das System für Klassifikation, insbesondere das Modell oder das künstliche neuronale Netz, mittels dieser Trainingsdaten wie zuvor in Schritt 204 beschrieben trainiert.

Anschließend endet das Verfahren.

Das erste Merkmal kann eine erste Distanz zwischen einem Wort des Satzes und einem ersten Relationsargument in einem Dependenzbaum für diesen Satz und eine zweite Distanz zwischen dem Wort und einem zweiten Relationsargument im Dependenzbaum charakterisieren.

Die Distanz kann durch eine Länge eines insbesondere kürzesten Pfades zwischen einer Position des ersten Relationsarguments und einer Position des zweiten Relationsarguments im Dependenzbaum des Satzes definiert sein. Die Länge kann durch eine Anzahl Kanten im Dependenzbaum definiert sein.

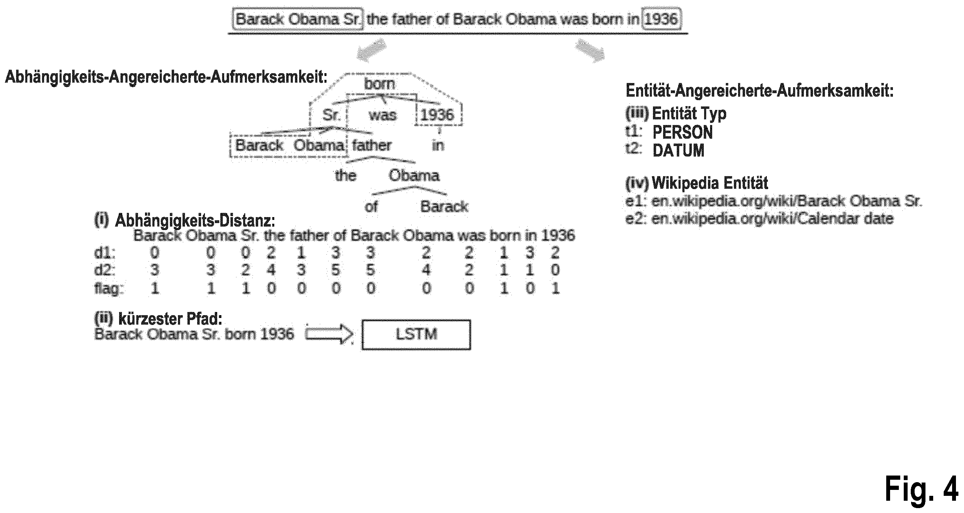

In Figur 4 ist ein Dependenzbaum für einen beispielhaften Satz "Barack Obama Sr., the father of Barack Obama, was born in 1936." dargestellt.

Der Dependenzbaum enthält Relationsargumente, die in Figur 4 den einzelnen Worten des Satzes entsprechend bezeichnet sind. Für den beispielhaften Satz ist in der Tabelle (i) "dependency distance" eine erste Distanz d1 für einen ersten Satzteil "Barack Obama Sr." und eine zweite Distanz d2 für einen zweiten Satzteil "1936" dargestellt. Die Satzteile werden durch Token repräsentiert, die wie zuvor beschrieben mit dem Modell ausgewertet werden können.

Für die erste Merkmalsgruppe ist in Figur 4 ein Merkmal dargestellt, das als binäre Variable "flag" anzeigt, ob ein Wort des Satzes im Dependenzbaum des Satzes auf dem kürzesten Pfad zwischen dem ersten Relationsargument und dem zweiten Relationsargument liegt. Das Wort liegt auf dem kürzesten Pfad, wenn die binare Variable "flag" 1 ist. Das Wort liegt nicht auf dem kürzesten Pfad, wenn die binare Variable "flag" 0 ist.

Vom ersten Merkmal kann ein lokaler Vektor $l_i$ abgeleitet werden, der für jedes Token i andere Ausprägungen umfasst. Der lokale Vektor $l_i$ kann beispielsweise eine Konkatenation der Vektoren umfassen, die die ersten Merkmale für ein Token i repräsentieren:

$$l_i = [d_i^{e_1}; d_i^{e_2}; f_i] \in \mathbb{R}^{2D+1}$$

wobei [;] die Konkatenation bezeichnet.

Beispielsweise wird vom künstlichen neuronalen Netze gelernt, für die relevanten Teile des Satzes, weniger oder kein Gewicht auf die Token i zu legen, die nicht auf dem kürzesten Pfad liegen.

Das erste Merkmal kann auch einen kürzesten Pfad zwischen zwei Entitäten charakterisieren. Für den mit (ii) "shortest path" bezeichneten Fall repräsentiert beispielsweise ein Ausgangvektor s eines LSTM für den kürzesten Pfad zwischen den Entitäten "Barck Obama Sr." und "1936" das erste Merkmal.

Das zweite Merkmal kann einen Typ eines der Relationsargumente charakterisieren. Beispielhafte Typen sind in der Tabelle (iii) "entity types" dargestellten Typen $t_1$: Person und $t_2$: Date. Diese können als dritte Vektoren repräsentiert sein.

Das zweite Merkmal kann auch Vektoren g umfassen, die wie in Yamada et al., 2017 "Learning distributed representations of texts and entities from knowledge base". Transactions of the Association for Computational Linguistics, 5:397-411 beschrieben berechnet sind. Diese werden auf Basis der beispielhaften Quellen für die Relationsargumente $e_1$ und $e_2$ bestimmt, die in der Tabelle (iv) "Wikipedia entities" dargestellt sind.

Aus diesen Merkmalen kann durch Konkatenation ein globaler Vektor erstellt werden, der für alle Token i eines Satzes gleich ist:

$$g = [s; t_1; t_2 s; e_1; e_2]$$

**Patentansprüche**

1. Verfahren zum Ansteuern einer Maschine, **dadurch gekennzeichnet, dass**

- in einer ersten Phase Trainingsdaten bereitgestellt werden (202), wobei die Trainingsdaten Texte mit Labels bezüglich einer strukturierten Information umfassen insbesondere in den Texten enthaltene Konzepte, Entitäten oder Relationen zwischen diesen,
- in einer zweiten Phase ein System für Klassifikation, insbesondere ein künstliches neuronales Netz, mittels dieser Trainingsdaten trainiert wird (204), wobei das System für Klassifikation eine Attentionfunktion umfasst, die ausgebildet ist, einzelne Vektorrepräsentationen einzelner Teile eines Satzes abhängig von Gewichten zu gewichten, wobei abhängig von einer Ausgabe der Attentionfunktion eine Klassifikation des Satzes bestimmt wird, wobei eines der Gewichte für eine Vektorrepräsentation eines der Teile eines Satzes durch ein erstes Merkmal, eine erste Gewichtung für das erste Merkmal, ein zweites Merkmal und eine zweite Gewichtung für das zweite Merkmal definiert ist, wobei das erste Merkmal abhängig von einem Dependenzbaum für den Satz definiert ist, und wobei das zweite Merkmal abhängig von wenigstens einem Relationsargument für den Satz definiert ist, und wobei

- in einer dritten Phase die Maschine in Erwiderung auf Eingangsdaten, insbesondere eine Sprach- oder Texteingabe, abhängig von einem Ausgangssignal des so trainierten Systems angesteuert wird (206).

2. Verfahren zum Füllen eines Knowledge Graphs, **dadurch gekennzeichnet, dass**

- in einer ersten Phase Trainingsdaten bereitgestellt werden (202), wobei die Trainingsdaten Texte mit Labels bezüglich einer strukturierten Information umfassen insbesondere in den Texten enthaltene Konzepte, Entitäten oder Relationen zwischen diesen,
- in einer zweiten Phase ein System für Klassifikation, insbesondere ein künstliches neuronales Netz, mittels dieser Trainingsdaten trainiert wird (204), wobei das System für Klassifikation eine Attentionfunktion umfasst, die ausgebildet ist, einzelne Vektorrepräsentationen einzelner Teile eines Satzes abhängig von Gewichten zu gewichten, wobei abhängig von einer Ausgabe der Attentionfunktion eine Klassifikation des Satzes bestimmt wird, wobei eines der Gewichte für eine Vektorrepräsentation eines der Teile eines Satzes durch ein erstes Merkmal, eine erste Gewichtung für das erste Merkmal, ein zweites Merkmal und eine zweite Gewichtung für das zweite Merkmal definiert ist, wobei das erste Merkmal abhängig von einem Dependenzbaum für den Satz definiert ist, und wobei das zweite Merkmal abhängig von wenigstens einem Relationsargument für den Satz definiert ist, und wobei
- in einer dritten Phase der Knowledge Graph in Erwiderung auf Eingangsdaten, die Text mit Entitäten enthalten, abhängig von Relationsargumenten, die abhängig von den Eingangsdaten bestimmt werden, mit Informationen gefüllt wird, insbesondere erweitert oder neu gebaut wird, wobei eine Relation zwischen zwei Entitäten des in den Eingangsdaten enthaltenen Texts abhängig vom Modell bestimmt und einer Kante des Knowledge Graphs zwischen diesen Entitäten zugeordnet wird (206).

3. Computerimplementiertes Verfahren zum Trainieren eines Modells, insbesondere eines künstlichen neuronalen Netzwerks, **dadurch gekennzeichnet, dass**

- in einer ersten Phase Trainingsdaten bereitgestellt werden (302), wobei die Trainingsdaten Texte mit Labes bezüglich einer strukturierten Information umfassen,
- in einer zweiten Phase ein System für Klassifikation, insbesondere ein künstliches neuronales Netz, mittels dieser Trainingsdaten trainiert wird (304), wobei das System für Klassifikation eine Attentionfunktion umfasst, die ausgebildet ist, einzelne Vektorrepräsentationen einzelner Teile eines Satzes abhängig von Gewichten zu gewichten, wobei abhängig von einer Ausgabe der Attentionfunktion eine Klassifikation des Satzes bestimmt wird, wobei eines der Gewichte für eine Vektorrepräsentation eines der Teile eines Satzes durch ein erstes Merkmal, eine erste Gewichtung für das erste Merkmal, ein zweites Merkmal und eine zweite Gewichtung für das zweite Merkmal definiert ist, wobei das erste Merkmal abhängig von einem Dependenzbaum für den Satz definiert ist, und wobei das zweite Merkmal abhängig von wenigstens einem Relationsargument für den Satz definiert ist.

4. Verfahren nach einem der Ansprüche 1 bis 3, **dadurch gekennzeichnet, dass** das erste Merkmal eine erste Distanz zwischen einem Wort des Satzes und einem ersten Relationsargument in einem Dependenzbaum für diesen Satz und eine zweite Distanz zwischen dem Wort und einem zweiten Relationsargument im Dependenzbaum, eine Vektorrepräsentation einer kürzesten Verbindung zwischen den beiden Relationsargumenten im Dependenzbaum und/oder eine binäre Variable, die anzeigt, ob das Wort auf der kürzesten Verbindung liegt oder nicht.

5. Verfahren nach Anspruch 4, **dadurch gekennzeichnet, dass** die erste Distanz durch eine Länge, insbesondere einer Anzahl Kanten, eines insbesondere kürzesten Pfades zwischen einer Position des Worts und des ersten Relationsarguments im Dependenzbaum des Satzes definiert ist und/oder dass die zweite Distanz durch eine Länge, insbesondere einer Anzahl Kanten, eines insbesondere kürzesten Pfades zwischen einer Position des Worts und des zweiten Relationsarguments im Dependenzbaum des Satzes definiert ist.

6. Verfahren nach einem der vorherigen Ansprüche, **dadurch gekennzeichnet, dass** das zweite Merkmal die Relationsargumente und ihren Typ charakterisiert.

7. Verfahren nach einem der vorherigen Ansprüche, **dadurch gekennzeichnet, dass** ein erster Vektor das erste Relationsargument repräsentiert, wobei ein zweiter Vektor das zweite Relationsargument repräsentiert.

8. Verfahren nach Anspruch 7, **dadurch gekennzeichnet, dass** ein Vektor den Typ eines der Relationsargumente repräsentiert.

9. Vorrichtung (100) zum Ansteuern einer Maschine und/oder zum Maschinenlernen, **dadurch gekennzeichnet, dass** die Vorrichtung (100) einen Prozessor (102), und einen Speicher (104) für ein Modell eines Systems für Klassifikation, insbesondere ein künstliches neuronales Netz, umfasst, die ausgebildet sind das Verfahren nach einem der Ansprüche 1 bis 8 auszuführen.

10. Computerprogramm, **dadurch gekennzeichnet, dass** das Computerprogramm computerlesbare Instruktionen umfasst, bei deren Ausführen auf einem Computer ein Verfahren nach einem der Ansprüche 1 bis 8 abläuft.

11. Computerprogrammprodukt, **gekennzeichnet durch** ein maschinenlesbares Speichermedium, auf dem das Computerprogramm nach Anspruch 10 gespeichert ist.

100

120

110

102

104

**Fig. 1**

202

204

206

**Fig. 2**

302

304

**Fig. 3**

Fig. 4

**Abhängigkeits-Angereicherte-Aufmerksamkeit:**

Barack Obama Sr. the father of Barack Obama was born in 1936

born

Sr. was 1936

Barack Obama father in

the Obama

of Barack

**(i) Abhängigkeits-Distanz:**

Barack Obama Sr. the father of Barack Obama was born in 1936

| | | | | | | | | | | | |
|---|---|---|---|---|---|---|---|---|---|---|---|
| d1: | 0 | 0 | 0 | 2 | 1 | 3 | 3 | 2 | 2 | 1 | 3 | 2 |
| d2: | 3 | 3 | 2 | 4 | 3 | 5 | 5 | 4 | 2 | 1 | 1 | 0 |
| flag: | 1 | 1 | 1 | 0 | 0 | 0 | 0 | 0 | 0 | 1 | 0 | 1 |

**(ii) kürzester Pfad:**

Barack Obama Sr. born 1936 ⟹ [ LSTM ]

**Entität-Angereicherte-Aufmerksamkeit:**

(iii) Entität Typ
t1: PERSON
t2: DATUM

(iv) Wikipedia Entität
e1: en.wikipedia.org/wiki/Barack Obama Sr.
e2: en.wikipedia.org/wiki/Calendar date

Europäisches Patentamt

European Patent Office

Office européen des brevets

**EUROPÄISCHER RECHERCHENBERICHT**

Nummer der Anmeldung

EP 20 18 3595

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | "Position aware attention and supervised data improve slot filling" In: ZHANG et al.: "Proceedings of the 2017 Conference on Empirical Methods in Natural Language Processing", 2017, Association for Computational Linguistics, XP002802146, Seiten 35-45, * Zusammenfassung; Abbildung 2; Tabelle 1 * * Seite 36, Spalte 1, Zeile 15 - Zeile 17 * * Seite 37, Spalte 1, Zeile 4 - Zeile 6 * * Teil 1 * * Gleichungen (1), (3), (4) * ----- | 1-11 | INV. G06N3/04 G06N5/02 G06N3/08 G06F40/20 |
| A | LI ZHI ET AL: "Recurrent neural networks with segment attention and entity description for relation extraction from clinical texts", ARTIFICIAL INTELLIGENCE IN MEDICINE, Bd. 97, 1. Juni 2019 (2019-06-01), Seiten 9-18, XP55777854, NL ISSN: 0933-3657, DOI: 10.1016/j.artmed.2019.04.003 * das ganze Dokument * ----- | 1-11 | |
| A | ZHU ZHANGDONG ET AL: "Improving Distantly Supervised Relation Classification With Attention and Semantic Weight", IEEE ACCESS, Bd. 7, 25. Juli 2019 (2019-07-25), Seiten 91160-91168, XP011736385, DOI: 10.1109/ACCESS.2019.2925502 [gefunden am 2019-07-22] * das ganze Dokument * ----- | 1-11 | |

RECHERCHIERTE SACHGEBIETE (IPC)

G06N
G06F

Der vorliegende Recherchenbericht wurde für alle Patentansprüche erstellt

| Recherchenort | Abschlußdatum der Recherche | Prüfer |
|---|---|---|
| Den Haag | 22. Februar 2021 | Aoun, Marc |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Position aware attention and supervised data improve slot filling. **MODELL NACH ZHANG et al.** Proceedings of the 2017 Conference on Empirical Methods in Natural Language Processing. Association for Computational Linguistics folgende vier Teile umfasst, 2017, 35-45

- Glove: Global vectors for word representation. **PENNINGTON.** Proceedings of the 2014 Conference on Empirical Methods in Natual Language Processing (EMNLP). Association for Computational Linguistics, 1532-1543
- **YAMADA et al.** Learning distributed representations of texts and entities from knowledge base. Transactions of the Association for Computational Linguistics, 2017, vol. 5, 397-411